# EUROPEAN PATENT SPECIFICATION

(11) **EP 2 866 224 B1**
(45) Date of publication and mention of the grant of the patent: **16.08.2017**
(21) Application number: 13808508.9
(22) Date of filing: 19.06.2013
(51) Int. Cl.: G10K 9/122, G08B 13/00, G10K 9/12

(54) **ALARM DRIVE CIRCUIT**
ALARMTREIBERSCHALTUNG
CIRCUIT DE COMMANDE D'ALARME

(30) Priority: 25.06.2012 JP 2012142291
(43) Date of publication of application: 29.04.2015
(73) Proprietor: Panasonic Intellectual Property Management Co., Ltd., Osaka-shi, Osaka 540-6207 (JP)
(72) Inventor: MUKAI, Taiki, Osaka-shi, Osaka 5406207 (JP); ABE, Yutaka, Osaka-shi, Osaka 540-6207 (JP); MATSUOKA, Yukihiro, Osaka-shi, Osaka 540-6207 (JP)
(74) Representative: Appelt, Christian W.
(86) International application number: PCT/JP2013/003809
(87) International publication number: WO 2014/002431

(56) References cited:
- CN-A- 102 445 615
- JP-A- H09 114 467
- JP-A- H09 147 269
- JP-A- 2011 109 616
- JP-A- 2011 230 556
- JP-A- 2011 242 698

## Description

### Technical Field

The present invention relates to alarm drive circuits.

### Background Art

In recent years, since the number of crimes with respect to automobiles such as a vehicle theft and a vehicle break-in has been increasing, vehicle theft alarms that generate an alarm when detecting vehicle abnormalities (intrusion of a suspicious person into a vehicle, breakage of window glass, towing by a wrecker or the like) are becoming widespread.

However, there is a concern that a thief removes a battery for the purpose of disabling operations of the vehicle theft alarm. In view of this, there has been proposed a vehicle theft alarm that can generate an alarm sound even in a state of the battery being removed, using a built-in battery that is mounted in the vehicle theft alarm. Also, in such a vehicle theft alarm, there has been proposed an alarm drive circuit that is configured to generate an alarm sound having a sufficient sound pressure even in a case of being driven by the built-in battery, and such an alarm drive circuit is disclosed in JP 2011-242698A, for example.

Incidentally, the conventional example described above includes a sound generator drive unit that is constituted by two switching elements and drives a siren (sound generator), and a PWM control unit that controls the duty cycles of the switching elements. "PWM" is an abbreviation for "Pulse Width Modulation". In the conventional example described above, the PWM control unit controls the duty cycles of the switching elements so that the siren is driven by high-frequency power supplied from a transformer connected to the siren.

However, in the conventional example described above, even though the duty cycles are changed between a case where the power supply is the battery and a case where the power supply is the built-in battery, the duty cycles are not changed with respect to changes in other conditions. Here, the sirens have individual differences from product to product, and the consumption currents during driving are different due to the individual differences. Consequently, the different sirens may have different sound pressures depending on their own different consumption currents.

Accordingly, in the conventional example described above in which the sirens are operated at the same constant duty cycle, there is a problem in that sound pressures of sounds outputted from the different sirens are different due to the different consumption currents caused by the individual differences of the different sirens.

A further general background technology is also disclosed in JP 2011-230556 A.

### Summary of Invention

The present invention has been made in view of the above-described problems, and an object of the present invention is to provide an alarm drive circuit that can prevent sound pressures of sounds outputted from different sound generators from differing from each other due to different consumption currents caused by individual differences of the different sound generators.

An alarm drive circuit according to the present invention includes: a transformer to be connected to a sound generator; a drive unit that includes a switch unit interposed between a power supply and the transformer and is configured to turn on/off the switch unit to supply a drive power to the sound generator by converting a power supply voltage into a high-frequency voltage via the transformer; a control unit configured to perform PWM control by giving a drive signal to the switch unit of the drive unit; a voltage detection unit configured to measure the power supply voltage; a temperature detection unit configured to measure an ambient temperature of the sound generator; and a current detection unit configured to measure consumption current in the sound generator. The control unit is configured to store a threshold of the consumption current associated with the power supply voltage and the ambient temperature, and two or more of pattern tables separated by the threshold. The control unit is configured to make comparison of the consumption current value measured by the current detection unit with the threshold and select one of the two or more pattern tables based on a result of the comparison, and adjust the drive power with reference to the selected pattern table to keep a sound pressure of a sound outputted from the sound generator constant.

It is preferable that, in the alarm drive circuit, each of the two or more pattern tables includes data on an intended on-pulse width of the drive signal associated with the power supply voltage and the ambient temperature, and the control unit is configured to select the intended on-pulse width based on measurements of the voltage detection unit and the temperature detection unit.

It is preferable that, in the alarm drive circuit, each of the two or more pattern tables includes data on an intended frequency of the drive signal associated with the power supply voltage and the ambient temperature, and the control unit is configured to select the intended frequency based on measurements of the voltage detection unit and the temperature detection unit.

According to the present invention, the power supply voltage, and the ambient temperature and the consumption current of the sound generator are measured, the measured consumption current value is compared with the threshold of the consumption current associated with the power supply voltage and the ambient temperature of the sound generator, and one of the two or more pattern tables separated by the threshold is selected. The drive power is adjusted to keep the sound pressure of the sound outputted from the sound generator constant with reference to the selected pattern table. Accordingly, the sound pressures of the sounds outputted from the different sound generators can be prevented from differing from each other due to the different consumption currents caused by the individual differences of the different sound generators.

### Brief Description of Drawings

FIG. 1 is a schematic circuit diagram illustrating an alarm drive circuit according to an embodiment of the present invention;
FIG. 2 is an operating waveform diagram in the alarm drive circuit according to the embodiment of the present invention;
FIG. 3 is an operating waveform diagram in the alarm drive circuit according to the embodiment of the present invention;
FIG. 4 is a diagram illustrating a pattern table of pattern A in the alarm drive circuit according to the embodiment of the present invention;
FIG. 5 is a diagram illustrating a pattern table of pattern B in the alarm drive circuit according to the embodiment of the present invention; and
FIG. 6 is a diagram illustrating a pattern table of pattern C in the alarm drive circuit according to the embodiment of the present invention.

### Description of Embodiments

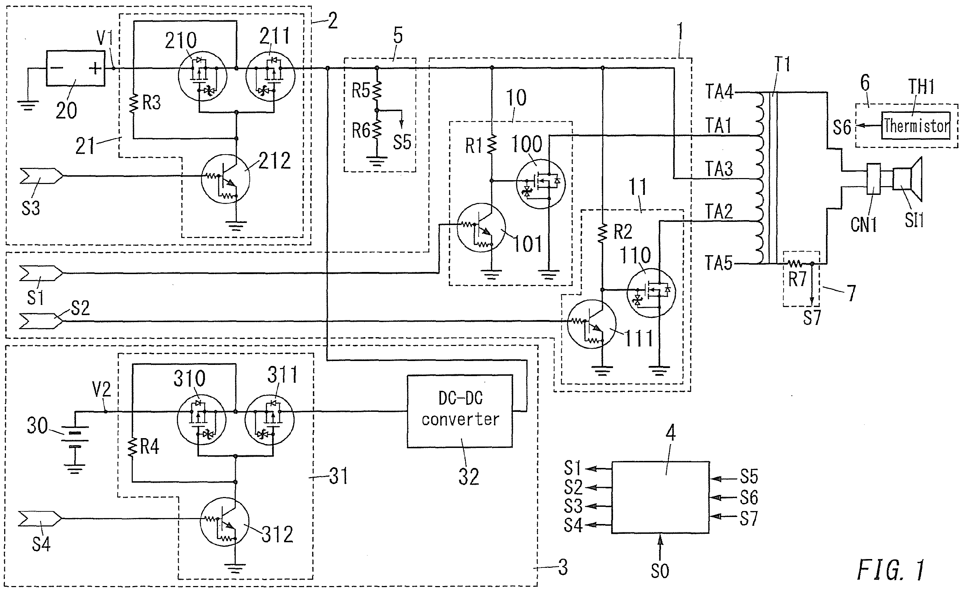

Hereinafter, an alarm drive circuit according to an embodiment of the present invention will be described with reference to drawings. The alarm drive circuit according to the present embodiment includes, as shown in FIG. 1, a transformer **T1,** a drive unit **1,** a vehicle power supply unit **2,** a built-in battery unit **3,** a control unit **4,** a voltage detection unit **5,** a temperature detection unit **6,** and a current detection unit 7.

The transformer **T1** is constituted by an auto-transformer. A siren (sound generator) **SI1** constituted by a piezoelectric loudspeaker or a dynamic loudspeaker is connected between output terminals of the transformer **T1.** Taps TA4, TA1, TA3, TA2 and TA5 are provided in the transformer **T1** in the stated order from the end of the winding, the taps **TA1** to **TA3** constitute an input portion, and the taps **TA4** and **TA5** constitute an output portion. The taps **TA4** and **TA5** are provided at the opposite ends of the winding, and the tap **TA3** is provided at a neutral point of the transformer **T1.** Also, the taps **TA1** and **TA2** are provided so that the tap **TA3** is positioned between the taps **TA1** and **TA2.** The taps **TA4** and **TA5** are connected to the siren **SI1** via a connector **CN1.** Also, the tap **TA3** is connected to the vehicle power supply unit **2** and the built-in battery unit **3.** Also, the taps **TA1** and **TA2** are connected to the drive unit **1.**

The drive unit **1** includes a first switch unit **10,** a second switch unit **11,** and resistors **R1** and **R2.** The first switch unit **10** is constituted by a switching element **100** that is an N-channel type MOSFET and a switching element **101** that is an NPN type transistor. "MOSFET" is an abbreviation for "Metal-Oxide-Semiconductor-Field-Effect-Transistor". Also, the second switch unit **11** is constituted by a switching element **110** that is an N-channel type MOSFET and a switching element **111** that is an NPN type transistor. Each of the switching elements **100** and **110** includes a parasitic diode connected between its drain and its source, and a protection diode connected between its gate and its source. Also, in each of the switching elements **101** and **111,** a bias resistor is connected between its input and its base and another bias resistor is connected between its base and its emitter.

The drain of the switching element **100** is connected to the tap **TA1** of the transformer **T1,** the gate thereof is connected to a connection point between the resistor **R1** and the collector of the switching element **101,** and the source thereof is grounded (earthed). Also, the drain of the switching element **110** is connected to the tap **TA2** of the transformer **T1,** the gate thereof is connected to a connection point between the resistor **R2** and the collector of the switching element **111,** and the source thereof is grounded (earthed). The collector of the switching element **101** is connected to the tap **TA3** of the transformer **T1** via the resistor **R1,** and the emitter thereof is grounded (earthed). A first drive signal **S1** is inputted to the base of the switching element **101.** The collector of the switching element **111** is connected to the tap **TA3** of the transformer **T1** via the resistor **R2,** and the emitter thereof is grounded (earthed). A second drive signal **S2** is inputted to the base of the switching element **111.**

The vehicle power supply unit **2** is constituted by a battery **20** and a switch unit **21.** The battery **20** is a lead storage battery mounted in a vehicle. The positive electrode of the battery **20** is connected to the switch unit **21** and the negative electrode thereof is grounded.

The switch unit **21** is constituted by two switching elements **210** and **211** that are P-channel type MOSFETs, and a switching element **212** that is an NPN type transistor. Each of the switching elements **210** and **211** includes a parasitic diode connected between its drain and its source, and a protection diode connected between the gate and the source. Also, the switching element **212** includes a bias resistor connected between its input and its base and another bias resistor connected between its base and its emitter. The drain of the switching element **210** is connected to the positive electrode of the battery **20,** the gate thereof is connected to the collector of the switching element **212,** and the source thereof is connected to the source of the switching element **211.** Also, the gate of the switching element **211** is connected to the collector of the switching element **212,** and the drain thereof is connected to the tap **TA3** of the transformer **T1.** Furthermore, a resistor **R3** is connected between the gates and the sources of the switching elements **210** and **211.** The emitter of the switching element **212** is grounded. Also, a battery control signal **S3** is inputted to the base of the switching element **212.**

The built-in battery unit **3** is constituted by a built-in battery **30,** a switch unit **31,** and a DC/DC converter **32.** A secondary battery such as a Ni-MH battery or a primary battery such as a lithium battery is used for the built-in battery **30.** Also, the positive electrode of the built-in battery **30** is connected to the switch unit **31** and the negative electrode thereof is grounded.

The switch unit **31** is constituted by two switching elements **310** and **311** that are P-channel type MOSFETs and a switching element **312** that is an NPN type transistor. Each of the switching elements **310** and **311** includes a parasitic diode connected between its drain and its source, and a protection diode connected between its gate and its source. Also, the switching element **312** includes a bias resistor connected between its input and its base and another bias resistor connected between its base and its emitter. The drain of the switching element **310** is connected to the positive electrode of the built-in battery **30,** the gate thereof is connected to the collector of the switching element **312,** and the source thereof is connected to the source of the switching element **311.** Also, the gate of the switching element **311** is connected to the collector of the switching element **312,** and the drain thereof is connected to the DC/DC converter **32.** Furthermore, a resistor **R4** is connected between the gates and the sources of the switching elements **310** and **311.** The emitter of the switching element **312** is grounded. Also, a built-in battery control signal **S4** is inputted to the base of the switching element **312.**

The DC/DC converter **32** is constituted by a flyback converter, for example, and the output thereof is connected to the tap **TA3** of the transformer **T1.** The DC/DC converter **32** boosts the output voltage of the built-in battery **30** and outputs the boosted voltage to the drive unit **1.**

The voltage detection unit **5** is constituted by a series circuit of two resistors **R5** and **R6** and is connected to the output terminals of the vehicle power supply unit **2** and the built-in battery unit **3.** A connection point between the resistors **R5** and **R6** is connected to the control unit **4.** Accordingly, a voltage obtained by dividing a power supply voltage (output voltage of the vehicle power supply unit **2** or output voltage of the built-in battery unit 3) is inputted to the control unit **4** as a voltage detection signal **S5.** The control unit **4** monitors the power supply voltage based on the voltage detection signal **S5.**

The temperature detection unit **6** is constituted by a thermistor **TH1** that is a temperature sensor. The thermistor **TH1** is attached to an outer surface of a casing (not shown), for example. The casing serves as an outer shell of the siren **SI1** and is made of resin material. The thermistor **TH1** measures the ambient temperature of the siren **SI1** via the casing. Naturally, the arrangement of the thermistor **TH1** is not limited thereto, and the thermistor **TH1** may be placed in the vicinity of the casing of the siren **SI1** without being attached to the casing. In this case, the thermistor **TH1** measures the ambient temperature of the siren **SI1** via the air. The thermistor **TH1** is connected to the control unit **4.** Accordingly, the ambient temperature of the siren **SI1** measured by the thermistor **TH1** is inputted to the control unit **4** as the temperature detection signal **S6.** The control unit **4** monitors the ambient temperature of the siren **SI1** based on the inputted temperature detection signal **S6.**

The current detection unit **7** is constituted by a detection resistor **R7** that is interposed between the connector **CN1** and the tap **TA5** of the transformer **T1.** An end, which is connected to the connector **CN1,** of the detection resistor **R7** is connected to the control unit **4.** Accordingly, a voltage subjected to a voltage drop in the detection resistor **R7** is inputted to the control unit **4** as the current detection signal **S7.** The control unit **4** monitors a consumption current in the siren **SI1** based on the inputted current detection signal **87.**

The control unit **4** is constituted by a microcontroller (not shown) and a memory (not shown) as main components. The control unit **4** controls driving of the first and second switch units **10** and **11** by outputting the first drive signal **S1** and the second drive signal **S2** respectively to the first switch unit **10** and the second switch unit **11** of the drive unit **1** (refer to FIG. 1). Also, the control unit **4** monitors the output voltage **V1** of the battery **20** and the output voltage **V2** of the built-in battery **30.** The control unit **4** outputs the battery control signal **S3** and the built-in battery control signal **S4** respectively to the vehicle power supply unit **2** and the built-in battery unit **3** based on the output voltages **V1** and **V2.** Accordingly, the control unit **4** selects either one of the battery **20** and the built-in battery **30** as a power supply for driving the siren **SI1.** Also, an alarm signal S0 that is outputted from an abnormality detection unit (not shown) included in a vehicle theft alarm (not shown) is inputted to the control unit 4. The alarm signal S0 indicates existence/non-existence of abnormality.

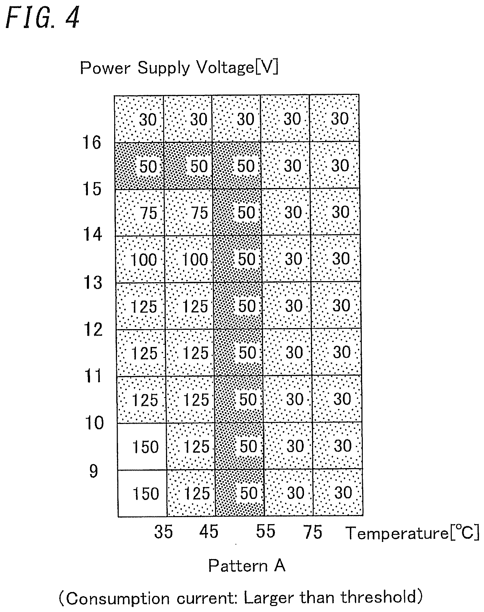

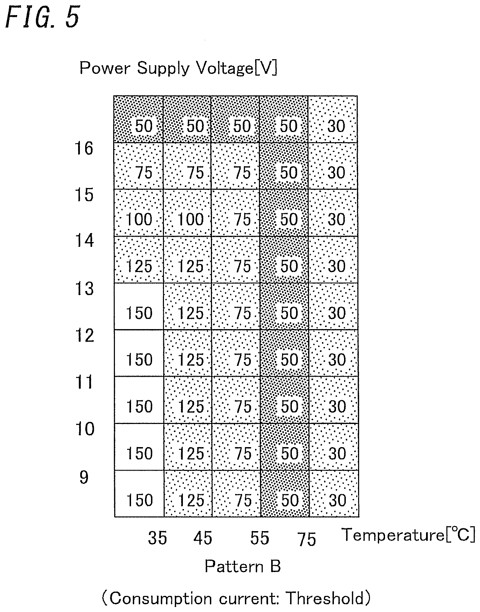

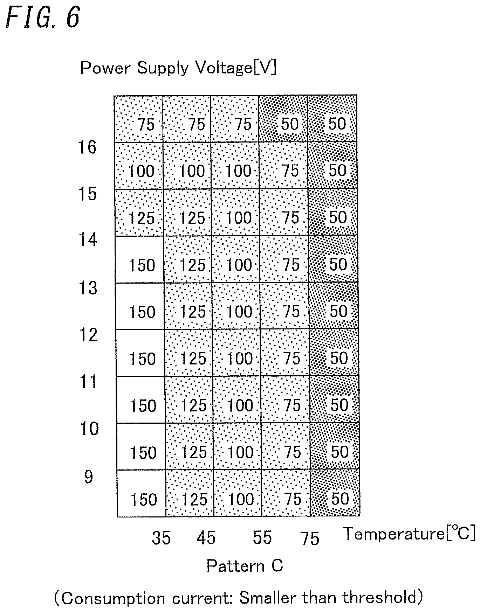

Two or more (three in the alarm drive circuit according to the present embodiment) pattern tables are stored in the memory of the control unit **4,** as shown in FIGS. 4 to 6. These pattern tables include data on on-pulse widths T_{ON} of the drive signals **S1** and S2 associated with the ambient temperature and the power supply voltage of the siren **SI1.** Note that the unit of the on-pulse width T_{ON} shown in the pattern tables is "µs". Also, data on a threshold of the consumption current associated with the ambient temperature and the power supply voltage of the siren **SI1** is stored in advance in the memory of the control unit **4.** The pattern tables include a pattern table of pattern A (refer to FIG. 4), a pattern table of pattern B (refer to FIG. 5), and a pattern table of pattern C (refer to FIG. 6) that are separated by the threshold of consumption current.

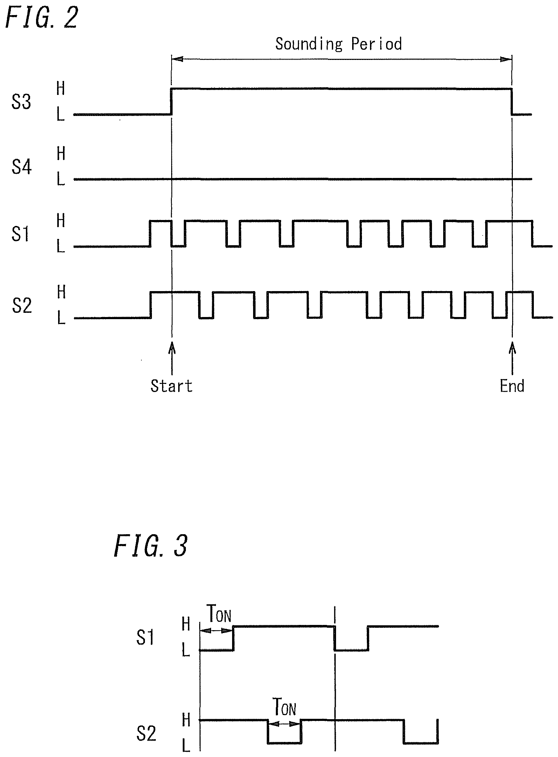

The on-pulse width T_{ON} means a period of a low level with regard to each of the drive signals **S1** and **S2,** as shown in FIG. 3. A current flows through the transformer **T1** during the period corresponding to the on-pulse width T_{ON}, and thus drive power is supplied to the siren **SI1,** as described later. Accordingly, the control unit **4** performs control to change the on-pulse width T_{ON}, that is, PWM control, on the drive unit **1** so as to adjust the drive power that is supplied to the siren **SI1,** and thus adjusts the sound pressure. Note that, in all the pattern tables, the on-pulse width T_{ON} decreases with an increase in the power supply voltage as well as an increase in the ambient temperature of the siren **SI1.**

The voltage detection signal **S5** from the voltage detection unit **5,** the temperature detection signal **S6** from the temperature detection unit **6,** and the current detection signal **S7** from the current detection unit **7** are inputted to the control unit **4,** as shown in FIG. 1. The control unit **4** selects one of the pattern tables based on the detection signals **S5** to **S7,** and selects the intended on-pulse width T_{ON} and then performs the PWM control on the drive unit **1.**

Hereinafter, operations of the alarm drive circuit according to the present embodiment will be described. First, a case of supplying operating power to the siren **SI1** using the battery **20** will be described. The control unit **4** monitors the output voltage **V1** of the battery **20.** The control unit **4** outputs the battery control signal **S3** of a high level to the switch unit **21** if the output voltage **V1** is a predetermined voltage or more. The switching element **212** is turned on by the battery control signal **S3,** and the switching elements **210** and **211** are also turned on. Accordingly, the battery **20** is electrically connected to the tap **TA3** of the transformer **T1,** and supplies electric power to the transformer **T1.** Accordingly, the drive power can be supplied to the siren **SI1** via the transformer **T1.**

Also, the control unit **4** outputs the built-in battery control signal **S4** of a low level to the switch unit **31.** The switching element **312** is turned off by the built-in battery control signal **S4,** and the switching elements **310** and **311** are also turned off. Accordingly, when the battery **20** is used as the power supply, the built-in battery **30** is not electrically connected to the tap **TA3** of the transformer **T1,** and does not supply electric power to the transformer **T1.**

Next, a case of energizing the siren **SI1** with the built-in battery **30** will be described. The control unit **4** monitors the output voltage **V2** of the built-in battery **30.** The control unit **4** outputs the built-in battery control signal **S4** of a high level to the switch unit **31,** if the output voltage **V1** of the battery **20** is lower than the predetermined voltage, and the output voltage **V2** of the built-in battery **30** is a predetermined voltage or more. The switching element **312** is turned on by the built-in battery control signal **S4,** and the switching elements **310** and **311** are also turned on. Accordingly, the built-in battery **30** is electrically connected to the tap **TA3** of the transformer **T1** via the DC/DC converter **32,** and supplies electric power to the transformer **T1.** Accordingly, the drive power can be supplied to the siren **SI1** via the transformer **T1.**

Also, the control unit **4** outputs the battery control signal **S3** of a low level to the switch unit **21.** The switching element **212** is turned off by the battery control signal **S3,** and the switching elements **210** and **211** are also turned off. Accordingly, when the built-in battery **30** is used as the power supply, the battery **20** is not electrically connected to the tap **TA3** of the transformer **T1,** and does not supply electric power to the transformer **T1.**

Next, a case of operating the siren **SI1** will be described with reference to FIGS. 2 and **3****.** Note that the following explanation relates to a case where the battery **20** is used as the power supply, and however the operation is similar to that in a case where the built-in battery **30** is used as the power supply.

The abnormality detection unit of the vehicle theft alarm outputs the alarm signal **S0** of a high level when detecting an abnormality. The control unit **4** outputs the first drive signal **S1** and the second drive signal **S2** that switch alternately between a high level and a low level to the drive unit **1** upon receiving the alarm signal **S0** of a high level. In the first switch unit **10** of the drive unit **1,** when the switching element **101** is turned on by the first drive signal **S1** of a high level, the switching element **100** is turned off, and the tap **TA1** of the transformer **T1** is separated from the ground (earth). Also, in the first switch unit **10,** when the switching element **101** is turned off by the first drive signal **S1 of a** low level, the switching element **100** is turned on and the tap **TA1** of the transformer **T1** is electrically connected to the ground (earth) and current flows. Accordingly, current flows intermittently between the taps **TA1** and **TA3** of the transformer **T1** according to the first drive signal **S1.**

Similarly, in the second switch unit **11** of the drive unit **1,** when the switching element **111** is turned on by the second drive signal **S2** of a high level, the switching element **110** is turned off, and the tap **TA2** of the transformer **T1** is separated from the ground (earth). Also, in the second switch unit **11,** when the switching element **111** is turned off by the second drive signal **S2** of a low level, the switching element **110** is turned on and the tap **TA2** of the transformer **T1** is electrically connected to the ground (earth) and current flows. Accordingly, current flows intermittently between the taps **TA2** and **TA3** of the transformer **T1** according to the second drive signal **S2.**

In the transformer **T1,** input voltages between the taps **TA1** and **TA3** and between the taps **TA2** and **TA3** are boosted, and a high-frequency voltage is outputted between the taps **TA4** and **TA5.** Accordingly, drive power is supplied to the siren **SI1** via the connector **CN1,** and the siren **SI1** generates an alarm sound.

On the other hand, the abnormality detection unit of the vehicle theft alarm outputs the alarm signal **S0** of a low level while not detecting any abnormality. The control unit **4** outputs the first and second drive signals **S1** and **S2** of high levels to the drive unit **1** when receiving the alarm signal **S0** of a low level. At this time, the switching elements **101** and **111** are turned on and the switching elements **100** and **110** are turned off in the switch units **10** and **11.** Therefore, the siren **SI1** does not generate the alarm sound since current does not flow between the taps **TA1** and **TA3** and between the taps **TA2** and **TA3** of the transformer **T1,** and therefore the drive power is not supplied to the siren **SI1.**

Here, the control unit **4** adjusts the drive power supplied to the siren **SI1** by adjusting the on-pulse widths T_{ON} of the drive signals **S1** and **S2,** and performs the following operations at this time. That is, the control unit **4** measures the power supply voltage based on the voltage detection signal **S5** and measures the ambient temperature of the siren **SI1** based on the temperature detection signal **S6,** and reads out the corresponding threshold of the consumption current from the memory. The control unit **4** makes comparison of the read out threshold of the consumption current with the consumption current of the siren **SI1** based on the current detection signal **S7,** and selects one of the pattern tables based on the comparison result. Then, the control unit **4** selects the intended on-pulse width T_{ON} corresponding to the power supply voltage and the ambient temperature of the siren **SI1** with reference to the selected pattern table, and performs the PWM control on the drive unit **1.**

Note that, the threshold of the consumption current has a fixed range centered on the reference value corresponding to the power supply voltage and the ambient temperature of the siren **SI1,** and has a width. The control unit **4** selects the pattern table of pattern B if the measured consumption current is in the range of the threshold. Also, the control unit **4** selects the pattern table of pattern A if the measured consumption current is above the range of the threshold, and selects the pattern table of pattern C if the measured consumption current is below the range of the threshold.

Hereinafter, specific examples of the above operations will be described with reference to FIGS. 4 to 6. In the following description, it is assumed that the ambient temperature of the siren **SI1** is 45 to 55°C, and the power supply voltage is 12 to 13V, for example. If the measured consumption current is in the range of the threshold, the control unit **4** selects the pattern table of pattern B, and selects 75 µs as the intended on-pulse width T_{ON} and then performs the PWM control on the drive unit **1.** On the other hand, if the measured consumption current is above the range of the threshold, the control unit **4** selects the pattern table of pattern A, and selects 50 µs as the intended on-pulse width T_{ON} and then performs the PWM control on the drive unit 1. Also, if the measured consumption current is below the range of the threshold, the control unit **4** selects the pattern table of pattern C, and selects 100 µs as the intended on-pulse width T_{ON} and then performs the PWM control on the drive unit **1.**

As described above, the control unit **4** of the alarm drive circuit according to the present embodiment stores the threshold of the consumption current associated with the power supply voltage and the ambient temperature of the siren **SI1,** and the two or more pattern tables separated by the threshold. Also, the alarm drive circuit according to the present embodiment: measures the power supply voltage, the ambient temperature of the siren **SI1,** and the consumption current of the siren **SI1;** makes comparison of the measured consumption current value with the threshold of consumption current; and selects a pattern table from the two or more pattern tables. Then, the alarm drive circuit according to the present embodiment adjusts the drive power supplied to the siren **SI1** so as to keep the sound pressure of the sound outputted from the siren **SI1** constant with reference to the selected pattern table. Accordingly, in the alarm drive circuit according to the present embodiment, the sound pressures of the sounds outputted from the different sirens **SI1** are prevented from differing from each other due to the different consumption currents caused by the individual differences of the different sirens **SI1.**

Also, in the alarm drive circuit according to the present embodiment, each of the two or more pattern tables has data on the on-pulse width T_{ON} of the drive signal associated with the power supply voltage and the ambient temperature of the siren **SI1.** The control unit **4** of the alarm drive circuit according to the present embodiment selects the intended on-pulse width T_{ON} based on the measurements of the voltage detection unit **5** and the temperature detection unit **6,** and performs the PWM control on the drive unit **1** so as to keep the sound pressure of the sound outputted from the siren **SI1** constant. Accordingly, in the present embodiment, the sound pressure of the sound outputted from the siren **SI1** can be kept constant regardless of change in the power supply voltage and the ambient temperature of the siren **SI1.**

Note that although, in the alarm drive circuit according to the present embodiment, the control unit **4** selects one pattern table from the three pattern tables based on the consumption current, but a larger number of pattern tables may be prepared. In this case, the alarm drive circuit can show its effect even if differences between the consumption currents due to the individual differences of the different sirens **SI1** are relatively small, and additionally it is possible to improve an effect of preventing the sound pressures of the sounds outputted from the different sirens **SI1** from differing from each other.

Although, in the alarm drive circuit according to the present embodiment, the PWM control on the drive unit **1** is performed so as to keep the sound pressure of the sound outputted from the siren **SI1** constant by changing the on-pulse width T_{ON} of the drive signal, other control may be used for achieving the same purpose. For example, the control unit **4** may be configured to perform the PWM control on the drive unit **1** by changing the frequency (period) of the drive signal.

In this configuration, each of the two or more pattern tables has data on the frequency of drive signal associated with the power supply voltage and the ambient temperature of the siren **SI1,** in place of the data of the on-pulse width T_{ON}. The control unit **4** selects the intended frequency of the drive signal based on the measurements of the voltage detection unit **5** and the temperature detection unit **6,** and performs the PWM control on the drive unit **1** so as to keep the sound pressure of the sound outputted from the siren **SI1** constant. In this configuration as well, the sound pressure of the sound outputted from the siren **SI1** can be kept constant regardless of the change in the power supply voltage and the ambient temperature of the siren **SI1.**

Note that, the tone of the alarm outputted from the siren **SI1** changes with a change in the frequency of the drive signal, but the change of the tone is allowed so long as the frequency is changed within a range determined by a regulation (1.8 to 3.55 kHz, for example).

## Claims

1. An alarm drive circuit comprising:
a transformer (T1) to be connected to a sound generator;
a drive unit (1) that comprises a switch unit interposed between a power supply and the transformer (T1) and is configured to turn on/off the switch unit to supply a drive power to the sound generator by converting a power supply voltage into a high-frequency voltage via the transformer (T1); and
a control unit (4) configured to perform PWM control by giving a drive signal to the switch unit of the drive unit (1),
**characterized by** further comprising:
a voltage detection unit (5) configured to measure the power supply voltage;
a temperature detection unit (6) configured to measure an ambient temperature of the sound generator; and
a current detection unit (7) configured to measure consumption current in the sound generator,
the control unit (4) being configured to store a threshold of the consumption current associated with the power supply voltage and the ambient temperature,
and two or more of pattern tables separated by the threshold, and
the control unit (4) being configured to make comparison of the consumption current value measured by the current detection unit (7) with the threshold and select one of the two or more pattern tables based on a result of the comparison,
and adjust the drive power with reference to the selected pattern table to keep a sound pressure of a sound outputted from the sound generator constant.

2. The alarm drive circuit according to claim 1, wherein
each of the two or more pattern tables comprises data on an intended on-pulse width of the drive signal associated with the power supply voltage and the ambient temperature, and
the control unit (4) is configured to select the intended on-pulse width based on measurements of the voltage detection unit (5) and the temperature detection unit (6).

3. The alarm drive circuit according to claim 1, wherein
each of the two or more pattern tables comprises data on an intended frequency of the drive signal associated with the power supply voltage and the ambient temperature, and
the control unit (4) is configured to select the intended frequency based on measurements of the voltage detection unit (5) and the temperature detection unit (6).

## Patentansprüche

1. Alarmtreiberschaltung, die Folgendes umfasst:
einen Transformator (T1) zum Verbinden mit einem Schallgenerator;
eine Antriebseinheit (1), die eine Schalteinheit umfasst, die zwischen einer Stromversorgung und dem Transformator (T1) zwischengeschaltet und konfiguriert ist, um die Schalteinheit zu aktivieren/deaktivieren, um eine Antriebsleistung an den Schallgenerator durch Umwandeln einer Stromversorgungspannung in eine Hochfrequenzspannung über den Transformator (T1) zu liefern; und
eine Steuereinheit (4), die konfiguriert ist, um eine PWM-Steuerung durch Abgeben eines Antriebssignals an die Schalteinheit der Antriebseinheit (1) durchzuführen,
**dadurch gekennzeichnet, dass** sie ferner Folgendes umfasst:
eine Spannungserfassungseinheit (5), die konfiguriert ist, um die Stromversorgungsspannung zu messen;
eine Temperaturerfassungseinheit (6), die konfiguriert ist, um eine Umgebungstemperatur des Schallgenerators zu messen; und
eine Stromerfassungseinheit (7), die konfiguriert ist, um einen Stromverbrauch in dem Schallgenerator zu messen,
wobei die Steuereinheit (4) konfiguriert ist, um eine Schwelle des Stromverbrauchs zu speichern, der der Stromversorgungsspannung und der Umgebungstemperatur zugeordnet ist, und wobei zwei oder mehr Mustertabellen durch die Schwelle getrennt sind, und wobei
die Steuereinheit (4) konfiguriert ist, um einen Vergleich des Stromverbrauchswerts, der von der Stromerfassungseinheit (7) gemessen wird, mit der Schwelle herzustellen, um eine der zwei oder mehr Mustertabellen basierend auf einem Ergebnis des Vergleichs auszuwählen und um die Antriebsleistung mit Bezug auf die ausgewählte Mustertabelle anzupassen, um einen Schalldruck eines Schalls, der von dem Schallgenerator ausgegeben wird, konstant zu halten.

2. Alarmtreiberschaltung nach Anspruch 1, wobei
jede der zwei oder mehr Mustertabellen Daten auf einer vorgesehenen aktivierten Impulsbreite des Antriebssignals umfasst, das der Stromversorgungsspannung und der Umgebungstemperatur zugeordnet ist, und wobei
die Steuereinheit (4) konfiguriert ist, um die vorgesehene aktivierte Impulsbreite basierend auf Messungen der Spannungserfassungseinheit (5) und der Temperaturerfassungseinheit (6) auszuwählen.

3. Alarmtreiberschaltung nach Anspruch 1, wobei
jede der zwei oder mehr Mustertabellen Daten auf einer vorgesehenen Frequenz des Antriebssignals umfasst, das der Stromversorgungsspannung und der Umgebungstemperatur zugeordnet ist, und wobei
die Steuereinheit (4) konfiguriert ist, um die vorgesehene Frequenz basierend auf Messungen der Spannungserfassungseinheit (5) und der Temperaturerfassungseinheit (6) auszuwählen.

## Revendications

1. Circuit de commande d'alarme comprenant :
un transformateur (T1) destiné à être relié à un générateur de son ;
une unité de commande (1) qui comprend une unité de commutation interposée entre une alimentation électrique et le transformateur (T1) et qui est configurée pour activer/désactiver l'unité de commutation pour délivrer une puissance de commande au générateur de son en convertissant une tension d'alimentation électrique en une tension à haute fréquence via le transformateur (T1) ; et
une unité de contrôle (4) configurée pour effectuer un contrôle à modulation de largeur d'impulsions (PWM) en délivrant un signal de commande à l'unité de commutation de l'unité de commande (1),
**caractérisé en ce qu'**il comprend en outre :
une unité de détection de tension (5) configurée pour mesurer la tension d'alimentation électrique ;
une unité de détection de température (6) configurée pour mesurer une température ambiante du générateur de son ; et
une unité de détection de courant (7) configurée pour mesurer le courant de consommation dans le générateur de son,
l'unité de contrôle (4) étant configurée pour stocker un seuil du courant de consommation associé à la tension d'alimentation électrique et à la température ambiante, et deux ou plusieurs tables de motifs séparées par le seuil, et
l'unité de contrôle (4) étant configurée pour comparer la valeur du courant de consommation mesurée par l'unité de détection de courant (7) avec le seuil et sélectionner l'une des deux ou plusieurs tables de motifs sur la base d'un résultat de la comparaison, et ajuster la puissance de commande en référence à la table de motifs sélectionnée pour maintenir à un niveau constant une pression acoustique d'un son produit à partir du générateur de son.

2. Circuit de commande d'alarme selon la revendication 1, dans lequel :
chacune des deux ou plusieurs tables de motifs comprend des données sur une largeur d'impulsions d'activation souhaitée du signal de commande associé à la tension d'alimentation électrique et à la température ambiante, et
l'unité de contrôle (4) est configurée pour sélectionner la largeur d'impulsions d'activation souhaitée sur la base des mesures de l'unité de détection de tension (5) et de l'unité de détection de température (6).

3. Circuit de commande d'alarme selon la revendication 1, dans lequel :
chacune des deux ou plusieurs tables de motifs comprend des données sur une fréquence souhaitée du signal de commande associé à la tension d'alimentation électrique et à la température ambiante, et
l'unité de contrôle (4) est configurée pour sélectionner la fréquence souhaitée sur la base des mesures de l'unité de détection de tension (5) et de l'unité de détection de température (6).
